# EUROPEAN PATENT SPECIFICATION

(11) **EP 2 310 896 B1**
(45) Date of publication and mention of the grant of the patent: **19.03.2014**
(21) Application number: 08796823.6
(22) Date of filing: 30.07.2008
(51) Int. Cl.: G06K 7/10

(54) **ONE DIMENSIONAL BARCODE READER USING TWO DIMENSIONAL IMAGE SENSOR**
EINEN ZWEIDIMENSIONALEN BILDSENSOR VERWENDENDER EINDIMENSIONALER STRICHCODELESER
LECTEUR DE CODE À BARRES UNIDIMENSIONNEL UTILISANT UN DÉTECTEUR D'IMAGE BIDIMENSIONNEL

(43) Date of publication of application: 20.04.2011
(73) Proprietor: Optoelectronics Co., Ltd., Saitama Pref. 335-0002 (JP); Opticon, Inc., Renton, WA 98059 (US)
(72) Inventor: HAYAKAWA, Hiroshi, Warabi Saitama Pref. 335-0002 (JP); YOSHIHARA, Naoki, Warabi Saitama Pref. 335-0002 (JP); TANAKA, Yo, Warabi Saitama Pref. 335-0002 (JP); NOZAWA, Yuji, Warabi Saitama Pref. 335-0002 (JP)
(74) Representative: Charlton, Peter John
(86) International application number: PCT/US2008/071534
(87) International publication number: WO 2010/014084

(56) References cited:
- EP-A1- 1 717 728
- US-A- 5 418 357
- US-A- 5 477 042
- US-A1- 2005 279 836
- US-A1- 2006 081 712
- US-A1- 2007 164 112
- US-B2- 6 866 198

## Description

### TECHNICAL FIELD

This invention relates to symbol reading devices, and more specifically, to an improved two dimensional image sensor that is adapted to read a one dimensional barcode.

### BACKGROUND ART

One dimensional (1D) and two dimensional (2D) symbols are well known in the art and are used for pricing and inventory data. Typically, 1D or 2D barcodes consist of interspaced dark and light areas which encode various data used for pricing, inventory control, etc. The alternating dark and light areas are used in either one or two dimensions to encode data.

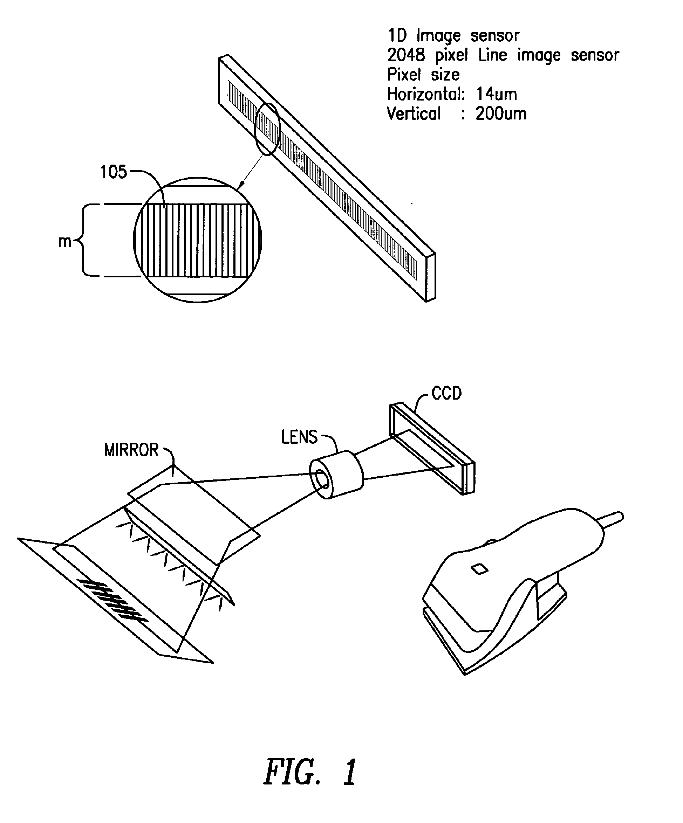

FIG. 1 depicts a 1D image sensor comprising a 2,048 pixel line image sensor, typical of the prior art. In such a system, each vertical line 105 captures a portion of the one dimensional barcode, and the system then transfers the data to a computer for decoding. Each element is shown as approximately 200 microns top to bottom in length. The relatively extended length of each element 105 helps to assure that a sufficient amount of photon energy is captured to provide a signal with a high signal to noise ratio.

One dimensional CCD arrays such as those of FIG. 1 which are typically used to read one dimensional barcodes, have several drawbacks. Because the width of such sensors is relatively large, the size of the optical system grows unacceptably. Second, in order to insure that the array of vertical pixel lines is appropriately aligned with the target to be imaged, relatively complicated mechanical adjustment is required.

Two dimensional image sensors have also been employed to read one dimensional barcodes. However, these two dimensional sensors operate by essentially taking a picture of the one dimensional barcode as a two dimensional image, and then transmitting the two dimensional image to a processor for processing and decoding. While such an arrangement achieves some advantages over the one dimensional CCD arrays such as that shown in FIG. 1, the required memory, computing power and circuitry to perform the complex image decoding operations becomes expensive.

In view of the foregoing, there exists a need in the art for an improved manner in which to decode a one dimensional barcode while taking better advantage of a 2D image sensor.

EP-A-1717728 discloses in general a method of reading a one dimensional barcode according to the preamble of claim 1. The optical reader of EP-A-1717728 has a 2D image sensor that is configured to operate in a partial frame capture mode. In a partial frame operating mode, the reader clocks out and captures at least one partial frame of image data having image data corresponding to less than all of the pixels of an image sensor pixel array. In one embodiment, the reader operating in a partial frame operating mode captures image data corresponding to a linear pattern of pixels of the image sensor, reads the image data, attempts to decode for a decodable ID symbol which may be represented in the image data, and captures a full frame of image data if the image data reading reveals a 2D symbol is likely to be present in a full field of view of the 2D image sensor.

### DISCLOSURE OF INVENTION

The above and other problems of the prior art are overcome in accordance with the present invention which relates to a new method for reading a one dimensional barcode signal using a two dimensional sensor.

According to the invention there is provided a method of reading a one dimensional (ID) barcode comprising capturing a two dimensional image of at least part of the ID barcode, said capturing step comprising activating at least a portion of a two dimensional (2D) image sensor to capture an image of said ID barcode, converting the two dimensional image to a one dimensional image, said converting step comprising combining corresponding elements of a first number of rows of said 2D image sensor into a second number of rows of said 2D image sensor to convert said captured image to a 1D signal, and decoding the one dimensional image, said decoding step comprising decoding said 1D signal, wherein rows are read from said 2D image sensor sequentially, and wherein, as each row is read it is combined with prior rows so that a cumulative combination of corresponding elements in each row is maintained, characterized in that the portion activated is determined at least in part in response to lens misalignment in order to correct for said lens misalignment.

The location and number of rows utilized in the two dimensional sensor is programmable and variable, allowing the effective height and location of the sensor to be varied. Additionally, the effective position of the sensor may also be varied, by selecting different specific rows of elements of the image sensor.

### BRIEF DESCRIPTION OF DRAWINGS

FIG. 1 depicts a prior art one dimensional sensor including a horizontal CCD array;
FIG. 2 depicts a barcode and a two dimensional image sensor to be used for reading the one dimensional barcode;
FIG. 3 depicts conceptually the use of control electronics to vary the vertical viewing angle in one embodiment of the present invention;
FIG. 4 demonstrates conceptually the use of "averaging" techniques in accordance with the present invention;
FIG. 5 depicts an additional embodiment in which the optical axis may be moved vertically through control electronics rather than physical movement;
FIG. 6 depicts a block diagram of exemplary electronics for processing images acquired using one or more embodiments of the present invention;
FIG. 7 shows an example of a misaligned barcode being read by a 2D sensor in accordance with the invention;
FIG. 8 depicts a variety of situations in which a raster scan mode of the invention would be useful; and
FIG. 9 shows such a raster scan embodiment conceptually.

### BEST MODE OF CARRYING OUT INVENTION

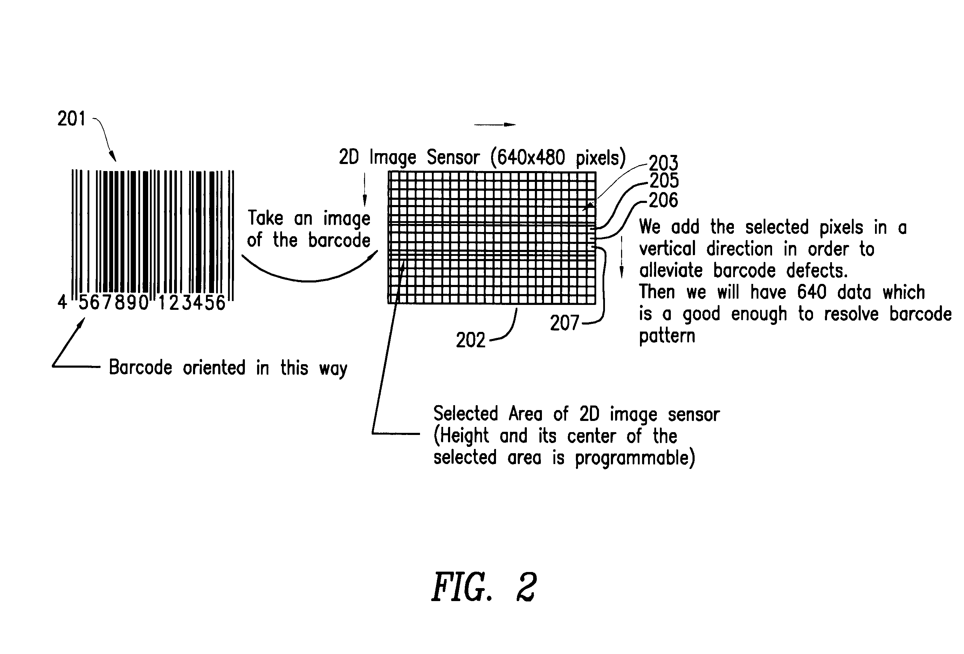

FIG. 2 depicts an exemplary barcode 201 comprising a conventional series of varying width, dark and light areas that encode information such as price, etc. Also shown is an exemplary two dimensional image sensor 202, comprising a plurality of rows and columns of pixels. Image sensor 202 may be comprised of CCD or CMOS technology, or any other convenient technology for providing the matrix image sensor elements.

As indicated by border 203, the control electronics are set up to only image a prescribed number of rows of the image sensor. The remaining rows can either be turned off or, simply left to operate but their information discarded or not read by the control electronics. The use of the limited number of rows thus creates an image of a strip across the bar code 201. An important aspect of some embodiments of the invention, as described below, is the ability to select the number and location of the particular rows that are used.

In operation, a set of one or more such rows in the image sensor is selected as the active set. Taking the example of FIG. 2, the active rows are labeled 205, 206 and 207. Upon activation, a horizontal slice of the barcode 201 is imaged on the three rows 205-207.

Once the barcode is imaged, the particular horizontal slice can be processed in a variety of manners in order to decode the image barcode. Preferably, the system does not have to apply 2D image processing techniques, which are computationally expensive, to the image of the part of the barcode represented inside the border 203.

One preferred method of such decoding involves averaging corresponding pixels in plural rows in order to create a one dimensional signal as if a laser had scanned the barcode. Specifically, the pixels in rows 205-207, column 1 would be summed and averaged, and the pixels in each of columns 2, 3, etc. of each row would also be summed and averaged. Thus, for each row, the pixel in column N would be averaged with the other pixels in column N. Then, the resulting single sequence of average values would represent a 640 pixel-wide signal whose intensity varies, and can thus be decoded as the one dimensional barcode symbol.

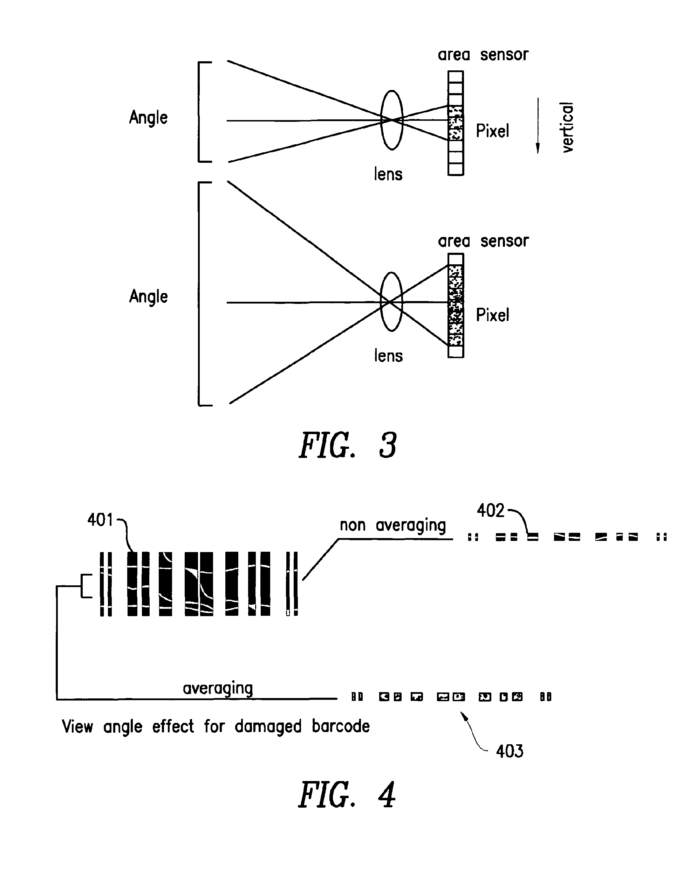

FIG. 4 depicts a barcode 401 wherein a horizontal slice is shown at 402 without the averaging. On the other hand, depicted at 403 is the signal that results from averaging the plural rows, three in the example of FIG. 2.

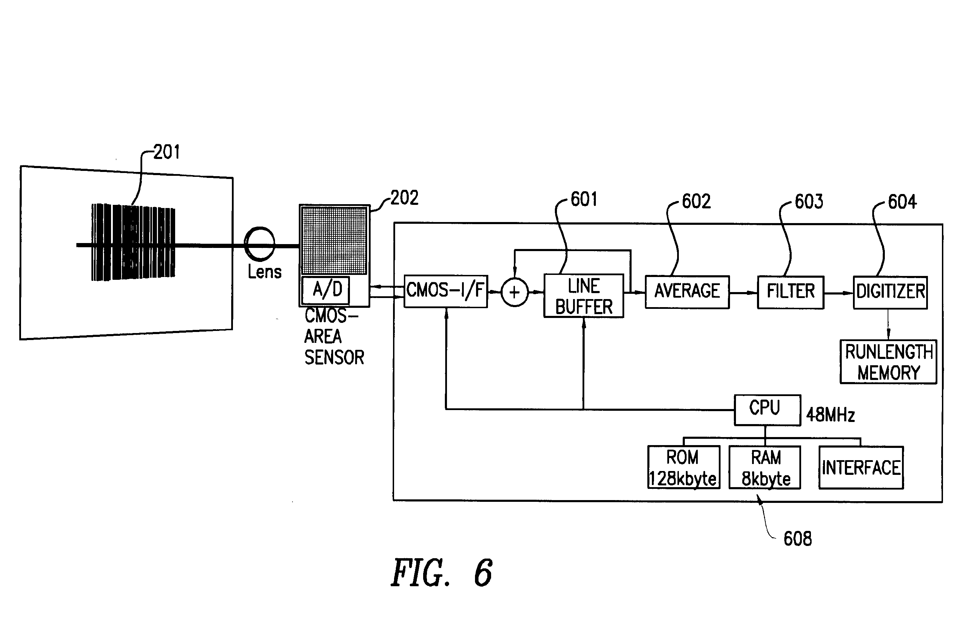

FIG. 6 shows an exemplary embodiment of the system for implementing the teachings of the present invention. Shown in FIG. 6 are the barcode 201 and image array 202 of FIG. 2. As each row is read into the line buffer, it is added to the previous row until all of the rows are in line buffer 601. At that point, the contents of line buffer 601 represent the sum of all of the rows in the horizontal slice described with respect to FIG. 2. The averager 602 then computes the average value and transmits it through filter 603 to remove the noise. A digitizer 604 is then utilized to convert the one dimensional signal into a run length signal wherein the pulse width varies in accordance with the data acquired. This may then be used to decode the data from the signal.

In an enhanced embodiment, the system may also store in memory 608 the signals read at one or more stages of the system. For example, the original three horizontal slices may be stored as they are read into line buffer 601. Additionally, or alternatively, the output of line buffer 601, which is a one dimensional signal, may instead be additionally stored in RAM 608.

By performing such storage for each particular barcode, the original data, or some intermediate version between the original data and the decoded run length data, will remain until after the barcode is successfully decoded. In this manner, if it turns out that the conversion of the barcode to the one dimensional run length code resulted in errors because the data has not been preserved in an exact enough manner, the original data will be available. In this way, conventional decoding techniques, wherein two dimensional imaging devices are used to image and then decode the barcode can be utilized. Although this involves significantly more processing power, it will only happen occasionally when degraded barcodes are encountered. As a result, system resources required to decode a large number of barcode sequentially are much less than would otherwise be the case.

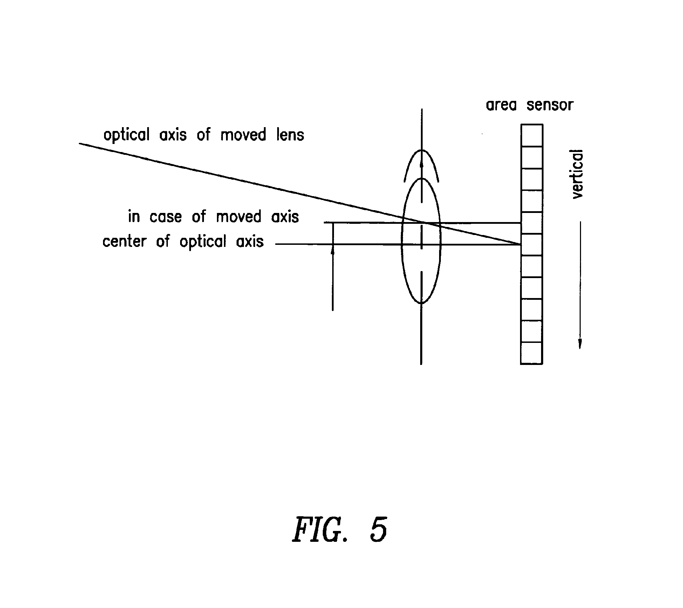

FIGs. 3 and 5 represent two different manners in which to control the 2D image sensor electronically in order to implement the equivalent of mechanical movements. Specifically, as shown in FIG. 3, the electronics associated with the system can alter the number of rows of elements used to calculate the average. By doing so, the system effectuates a result similar to what would be achieved if the field of view were altered by a mechanical movement of the optics. Although the example in FIG. 3 shows the expansion in rows used to be symmetrical around a horizontal center, where corresponding rows above and below the middle row are activated or deactivated, such need not be the case.

Additionally, it is not necessary that the rows utilized be adjacent to each other as shown in the foregoing examples. Instead, the system may select any set of plural rows as the active ones to be used, even if such active rows are separated by inactive rows, and even if the number of rows separating various rows that are used is different among different rows.

FIG. 5 also depicts the use of the control electronics to effectuate the equivalent of mechanical movement. Specifically, by selecting one or more rows from the 2D image sensor either higher or lower (or by selecting a center row which coincides with an optical axis), the system essentially moves the optical axis up or down. As a result, the relatively difficult mechanical vertical alignment of various components is eliminated.

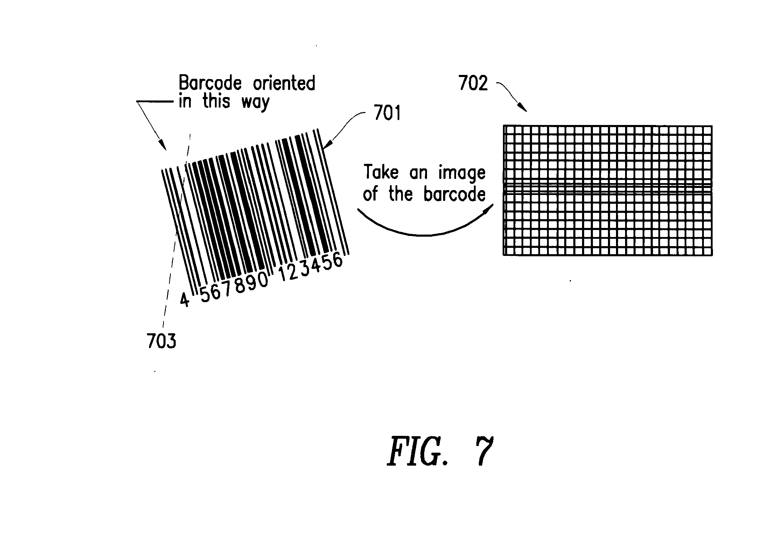

FIG. 7 depicts a barcode to be read, misoriented as shown. If the 2D image sensor is oriented as shown in FIG. 7, then the misorientation of the barcode will lead to a insufficient contrast in many cases. For example, the left most image sensor elements on several rows would fall along the line designated 703. Since some of those rows would encounter dark while others will encounter light due to the tilt as shown, a gray will result when an average is taken as described above. In this situation, the system can decrease the number of rows of the 2D image sensor uses as active, until the horizontal slice is thin enough that it results in a high enough contrast. Alternatively, the contrast can be used as an indicator in the sense that a signal can be sent to the operator, and perhaps the item bearing the barcode routed differently for realignment, if the system determines that the contrast is below a prescribed minimum. This would permit the item to be realigned manually, and perhaps placed back on a conveyer belt, for example, when the contrast indicates that the barcode is misaligned.

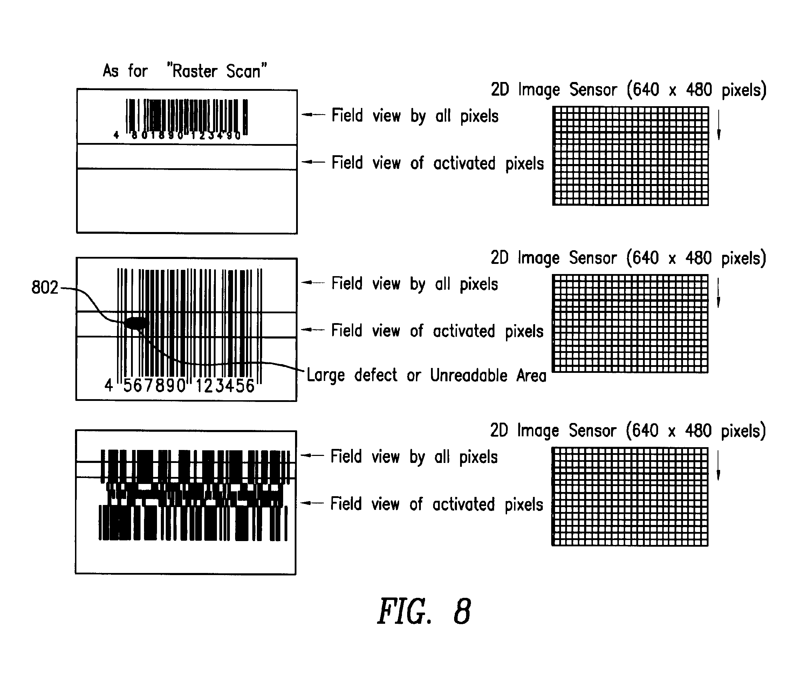

FIG. 8 indicates an embodiment of the present invention that uses the sequential activation of rows of the 2D image sensor to implement a scanning function. In FIG. 8 A, the set of one or more active rows is moved up or down, either one or plural at a time, in order to locate a suitable cross section of the bar code. Thus, if the target item is positioned slightly too high or too low, the capability to rapidly scan through all the rows avoids the need for a mechanical movement.

In FIG. 8 B, a large imperfection 802 is shown. If the one or more activated rows of image elements used by the sensor all pass through this imperfection, a portion of the barcode may be unreadable. Therefore, the scan mode can be used to move the activated set of one or more rows up or down, until a clean slice is found. Alternatively, although less preferred. The system can then use a large vertical area for averaging. This latter technique would have the effect of smearing the imperfection vertically, so it would not preclude decoding. It would however, increase the computation involved, as it requires a larger number of horizontal rows.

Still another embodiment of the present invention is depicted in FIG. 8 C, wherein the barcode is of the type that the horizontal slices vary at the bottom, the middle, or the top. This type of barcode can be treated by the system the same as plural independent 1D barcodes, and the raster scan capability described can be used to decode the barcode by moving the center of the activated rows down, one or more rows at a time.

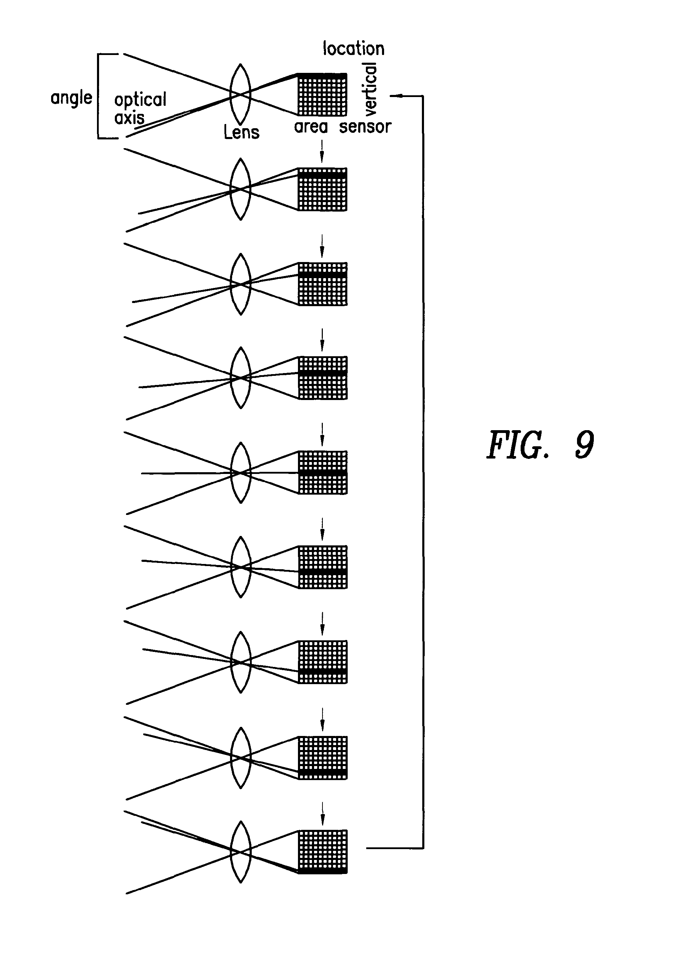

FIG. 9 represents conceptually how the scanning function operates by simply electronically activating differing rows of the 2D image sensor.

While the above describes the preferred embodiment of the present invention, various other modifications and additions will be apparent to those of skill in the art. For example, the system could use all rows of the 2D image sensor. This and other such modifications are intended to be covered by the claims appended hereto.

## Claims

1. A method of reading a one dimensional (1D) barcode (201) comprising
capturing a two dimensional image of at least part of the 1D barcode (201), said capturing step comprising activating at least a portion of a two dimensional (2D) image sensor (202) to capture an image of said 1D barcode (201),
converting the two dimensional image to a one dimensional image, said converting step comprising combining corresponding elements of a first number of rows (205, 206, 207) of said 2D image sensor (202) into a second number of rows of said 2D image sensor (202) to convert said captured image to a 1D signal (403), and
decoding the one dimensional image, said decoding step comprising decoding said 1D signal (403),
wherein rows are read from said 2D image sensor (202) sequentially, and wherein, as each row is read it is combined with prior rows so that a cumulative combination of corresponding elements in each row is maintained,
**characterized in that**
the portion activated is determined at least in part in response to lens misalignment in order to correct for said lens misalignment.

2. The method of claim 1 wherein said capturing comprises utilizing less than all rows (205, 206, 207) of said 2D image sensor (202), combining corresponding data in each of said plural rows to produce a 1D signal (403), and then decoding the 1D barcode (201) from the 1D signal (403).

3. The method of claim 2 wherein the rows (205, 206) are adjacent each other.

4. The method of claim 2 wherein the rows (205, 207) are not adjacent each other.

5. The method of claim 2 further comprising transmitting a signal from a CPU to control which rows of said 2D sensor (202) are utilized in said step of capturing.

6. The method of claim 5 wherein said rows that are utilized are not symmetrical with respect to a center row of said 2D image sensor (202).

7. The method of claim 5 wherein said signal controls activates or deactivates corresponding rows both above and below a middle row of said 2D image sensor (202).

8. The method of claim 1 wherein said decoding includes converting said 1D signal (403) into a run length signal.

9. The method of claim 8 further comprising transforming said 1D barcode (201) to said run length signal through several intermediate stages, storing at least one of said intermediate stages, and using said stored intermediate stage to decode said 1D barcode (201) if said run length signal is insufficient to permit decoding of said signal.

## Patentansprüche

1. Verfahren zum Lesen eines eindimensionalen (1D) Strichcodes (201), aufweisend:
Erfassen eines zweidimensionalen Bilds von wenigstens einem Teil des 1D-Strichcodes (201), wobei der Schritt des Erfassens ein Aktivieren von wenigstens einem Abschnitt eines zweidimensionalen (2D) Bildsensors (202) zum Erfassen des 1D-Strichcodes (201) aufweist,
Umwandeln des zweidimensionalen Bilds in ein eindimensionales Bild, wobei der Schritt des Umwandelns ein Kombinieren entsprechender Elemente einer ersten Anzahl von Zeilen (205, 206, 207) des 2D-Bildsensors (202) in eine zweite Anzahl von Zeilen des 2D-Bildsensors (202) zur Umwandlung des erfassten Bilds in ein 1D-Signal (403) aufweist, und
Decodieren des eindimensionalen Bilds, wobei der Schritt des Decodierens ein Decodieren des 1D-Signals (403) aufweist,
wobei Zeilen vom 2D-Bildsensor (202) sequenziell gelesen werden, und wobei, nachdem jede Zeile gelesen ist, diese mit vorhergehenden Zeilen kombiniert wird, so dass eine kumulative Kombination von entsprechenden Elementen in jeder Zeile aufrechterhalten wird,
**dadurch gekennzeichnet, dass**
der Teil, der aktiviert wird, wenigstens zum Teil als Reaktion auf eine fehlerhafte Linsenausrichtung mit dem Ziel einer Korrektur der fehlerhaften Linsenausrichtung bestimmt wird.

2. Verfahren nach Anspruch 1, wobei das Erfassen ein Nutzen von weniger als allen Zeilen (205, 206, 207) des 2D-Bildsensors (202), Kombinieren entsprechender Daten in jeder der mehreren Zeilen zur Erzeugung eines 1D-Signals (403) und danach Decodieren des 1D-Strichcodes (201) vom 1D-Signal (403) aufweist.

3. Verfahren nach Anspruch 2, wobei die Zeilen (205, 206) nebeneinander liegen.

4. Verfahren nach Anspruch 2, wobei die Zeilen (205, 207) nicht nebeneinander liegen.

5. Verfahren nach Anspruch 2, ferner aufweisend ein Übertragen eines Signals von einer CPU zur Steuerung, welche Zeilen des 2D-Sensors (202) im Schritt des Erfassens genutzt werden.

6. Verfahren nach Anspruch 5, wobei die Zeilen, die benutzt werden, nicht symmetrisch in Bezug auf eine mittlere Zeile des 2D-Bildsensors (202) sind.

7. Verfahren nach Anspruch 5, wobei das Signal entsprechende Zeilen sowohl oberhalb als auch unterhalb einer mittleren Zeile des 2D-Bildsensors (202) steuert, aktiviert oder deaktiviert.

8. Verfahren nach Anspruch 1, wobei das Decodieren ein Umwandeln des 1D-Signals (403) in ein Lauflängensignal aufweist.

9. Verfahren nach Anspruch 8, ferner aufweisend ein Umformen des 1D-Strichcodes (201) in das Lauflängensignale durch verschiedene Zwischenstufen, Speichern von wenigstens einer der Zwischenstufen und Anwenden der gespeicherten Zwischenstufe zum decodieren des 1D-Strichcodes (201), wenn das Lauflängensignal unzureichend ist, um ein Decodieren des Signals zu gestatten.

## Revendications

1. Procédé de lecture d'un code-barres unidimensionnel (1D) (201) comprenant
l'acquisition d'une image bidimensionnelle d'au moins une partie du code-barres 1D (201), ladite étape d'acquisition comprenant l'activation d'au moins une portion d'un capteur d'image bidimensionnelle (2D) (202) pour acquérir une image dudit code-barres 1D (201),
la conversion de l'image bidimensionnelle en une image unidimensionnelle, ladite étape de conversion comprenant la combinaison d'éléments correspondants d'un premier nombre de rangées (205, 206, 207) dudit capteur d'image 2D (202) en un deuxième nombre de rangées dudit capteur d'image 2D (202) pour convertir ladite image acquise en un signal 1D (403), et
le décodage de l'image unidimensionnelle, ladite étape de décodage comprenant le décodage dudit signal 1D (403),
dans lequel des rangées sont lues séquentiellement à partir dudit capteur d'image 2D (202), et dans lequel, au fur et à mesure de la lecture de chaque rangée, celle-ci est combinée à des rangées précédentes afin de maintenir une combinaison cumulative d'éléments correspondants dans chaque rangée,
**caractérisé en ce que**
la portion activée est déterminée au moins en partie en réponse à un désalignement de lentille afin de corriger ledit désalignement de lentille.

2. Procédé selon la revendication 1, dans lequel ladite acquisition comprend l'utilisation de moins de toutes les rangées (205, 206, 207) dudit capteur d'image 2D (202), la combinaison de données correspondantes dans chacune de ladite pluralité de rangées pour produire un signal 1D (403), puis le décodage du code-barres 1D (201) à partir du signal 1D (403).

3. Procédé selon la revendication 2, dans lequel les rangées (205, 206) sont adjacentes l'une à l'autre.

4. Procédé selon la revendication 2, dans lequel les rangées (205, 207) ne sont pas adjacentes l'une à l'autre.

5. Procédé selon la revendication 2, comprenant en outre la transmission d'un signal à partir d'une CPU pour commander quelles rangées dudit capteur 2D (202) sont utilisées à ladite étape d'acquisition.

6. Procédé selon la revendication 5, dans lequel lesdites rangées qui sont utilisées ne sont pas symétriques par rapport à une rangée centrale dudit capteur d'image 2D (202).

7. Procédé selon la revendication 5, dans lequel ledit signal commande l'activation ou la désactivation de rangées correspondantes au-dessus et au-dessous d'une rangée centrale dudit capteur d'image 2D (202).

8. Procédé selon la revendication 1, dans lequel ledit décodage comprend la conversion dudit signal 1D (403) en un signal de longueur de passage.

9. Procédé selon la revendication 8, comprenant en outre la transformation dudit code-barres 1D (201) en ledit signal de longueur de passage à travers plusieurs étages intermédiaires, le stockage d'au moins l'un desdits étages intermédiaires, et l'utilisation dudit étage intermédiaire stocké pour décoder ledit code-barres 1D (201) si ledit signal de longueur de passage est insuffisant pour permettre le décodage dudit signal.
